# EUROPÄISCHE PATENTSCHRIFT

(11) **EP 2 663 745 B1**
(45) Veröffentlichungstag und Bekanntmachung des Hinweises auf die Patenterteilung: **20.04.2016**
(21) Anmeldenummer: 11805784.3
(22) Anmeldetag: 21.12.2011
(51) Int. Cl.: F01M 5/00

(54) **VORRICHTUNG ZUM SCHMIEREN EINES GETRIEBES SOWIE EINES LAGERS**
DEVICE FOR LUBRICATING A TRANSMISSION AND A BEARING
DISPOSITIF POUR GRAISSER UNE TRANSMISSION ET UN ROULEMENT

(30) Priorität: 15.01.2011 DE 102011008672
(43) Veröffentlichungstag der Anmeldung: 20.11.2013
(73) Patentinhaber: Hydac Filtertechnik GmbH, 66280 Sulzbach/Saar (DE)
(72) Erfinder: SCHMIDT, Armin, 66557 Illingen (DE)
(74) Vertreter: Bartels, Martin Erich Arthur
(86) Internationale Anmeldenummer: PCT/EP2011/006482
(87) Internationale Veröffentlichungsnummer: WO 2012/095149

(56) Entgegenhaltungen:
- DE-A1- 10 242 602
- DE-A1-102009 018 009
- JP-A- 61 025 906

## Beschreibung

Die Erfindung betrifft eine Vorrichtung zum Schmieren eines Getriebes sowie eines Lagers, insbesondere eines Rotorlagers bei einer Windkraftanlage, wobei dem Getriebe und dem Rotorlager jeweils mindestens ein Schmierkreislauf der Vorrichtung zugeordnet ist, in dem im Betrieb der Vorrichtung jeweils ein Schmiermedium strömt.

Bei Windkraftanlagen wird das Getriebe zum Anpassen von Rotor- und Generatordrehzahl mit einem Schmiermedium, insbesondere mit Öl geschmiert. Die Rotorwelle des Rotors der Windkraftanlage ist üblicherweise mit einem als Wälzlager ausgeführten Rotorlager in einem Gehäuse der Windkraftanlage gelagert. Auch für das Rotorlager ist hierbei eine Schmierung mittels eines Schmiermediums, beispielsweise in Form von einem Öl vorgesehen. Aufgrund der an die Schmiermedien für das Getriebe und das Rotorlager zu stellenden unterschiedlichen Anforderungen, wie beispielsweise Viskosität und optimale Betriebstemperatur, kommen bei bekannten Windkraftanlagen für die beiden Schmierkreisläufe jeweils eigenständige Vorrichtungen zur Schmierung zum Einsatz.

Da im Rotorlager im Vergleich zum Getriebe weniger Wärme entsteht und durch große Lagergehäuseoberflächen eine Kühlung bewirkt wird, laufen die Rotorlager bei niedrigen Betriebstemperaturen, beispielsweise im Bereich von 10°C bis 40°C, während die Getriebe häufig Betriebstemperaturen von 50°C bis 80 °C erreichen. Aus schmiertechnischen Gründen kommen für den Einsatz beim Rotorlager Schmiermedien mit einer hohen Viskosität zum Einsatz. Bei tiefen Umgebungstemperaturen, beispielsweise im Winter, kann die Betriebstemperatur des Rotorlagers jedoch soweit absinken, dass das ohnehin hochviskose Schmiermedium eine höhere Viskosität annimmt, als dies für eine optimale Schmierung des Rotorlagers sinnvoll ist. Um dem zu begegnen, wird bei bekannten Anlagen beispielsweise eine Heizung im Schmierkreislauf des Rotorlagers vorgesehen.

Beim Getriebe hingegen ist aufgrund der hohen erreichten Betriebstemperaturen bei dem zugeordneten Schmierkreislauf oftmals eine Kühlung des Schmiermediums erforderlich, um eine möglichst effektive Schmierung des Getriebes beim Betrieb der Anlage zu erreichen.

Sowohl die angesprochene Heizung des Schmiermediums für das Rotorlager als auch die Kühlung des Schmiermediums für das Getriebe erfordern Einrichtungen, bei deren Betrieb ein Energieverbrauch, insbesondere ein Verbrauch an elektrischer Energie erfolgt.

Insbesondere bei Windkraftanlagen, die von ihrer Konzeption her für die Bereitstellung elektrischer Energie vorgesehen sind, ist zum Erreichen einer möglichst hohen Effektivität der Windkraftanlage deren Eigenverbrauch an Energie so gering wie möglich auszulegen.

Bei bekannten Vorrichtungen zum Schmieren eines Getriebes sowie eines Rotorlagers bei einer Windkraftanlage, ist dem Getriebe und dem Lager jeweils ein eigener Schmierkreislauf zugeordnet, in dem im Betrieb der Vorrichtung jeweils ein Schmiermedium strömt.

Ausgehend von diesem Stand der Technik ist es Aufgabe der Erfindung, eine Vorrichtung zum Schmieren eines Getriebes sowie eines Lagers, insbesondere eines Rotorlagers bei einer Windkraftanlage bereitzustellen, die bei reduziertem Energieverbrauch zum Betrieb der Vorrichtung eine zuverlässige Schmierung des Getriebes und des Rotorlagers, auch bei niedrigen Umgebungstemperaturen gewährleistet.

Dadurch dass bei der erfindungsgemäßen Vorrichtung zum Schmieren eines Getriebes sowie eines Lagers, insbesondere eines Rotorlagers bei einer Windkraftanlage, die Vorrichtung eine Wärmetauscheinrichtung für einen Wärmetransport zwischen dem Schmierkreislauf des Getriebes und dem Schmierkreislauf des Lagers aufweist, und dass die Wärmetauscheinrichtung im Betrieb der Vorrichtung eine Differenz zwischen der Temperatur des Schmiermediums in dem Schmierkreislauf des Getriebes und der Temperatur des Schmiermediums in dem Schmierkreislauf des Lagers durch WärmeKompensation zumindest teilweise ausgleicht, kann im Betrieb der Vorrichtung Wärme von dem, dem Getriebe zugeordneten Schmierkreislauf zu dem, dem Rotorlager zugeordneten Schmierkreislauf übertragen werden. Dergestalt nimmt das Schmiermedium des Schmierkreislaufs des Rotorlagers auch bei niedrigen Umgebungstemperaturen einen für die Schmierung günstigeren, insbesondere höheren Temperaturwert an. Gleichzeitig ist erreicht, dass durch die Abfuhr von Wärme von dem Schmiermedium des Schmierkreislaufs des Getriebes das dortige Schmiermedium in einem schmiertechnisch günstigen, insbesondere nicht zu hohen Temperaturbereich betrieben ist. Die erfindungsgemäße Lösung ist energetisch sehr günstig, da die im Schmierkreislauf des Getriebes unerwünschte Wärme zum erwünschten Aufwärmen des Schmiermediums in dem Schmierkreislauf des Rotorlagers genutzt ist. Umgekehrt ist auch ein Wärmeausgleich bei hohen Temperaturen möglich, wenn dann über den Rotorlager-Schmierkreislauf das heiße Getriebe der Windkraftanlage gekühlt wird.

In einer Ausführungsform der Erfindung weist die Wärmetauscheinrichtung einen Wärmetauscher mit einer Trenneinrichtung, vorzugsweise eine Trennwand zur Trennung eines ersten, auf einer ersten Seite der Trenneinrichtung angeordneten Bereichs des Wärmetauschers von einem zweiten, auf einer zweiten Seite der Trenneinrichtung angeordneten Bereichs des Wärmetauschers auf und die Trenneinrichtung koppelt den ersten Bereich und den zweiten Bereich thermisch miteinander. In dem ersten Bereich ist eines der Schmiermedien durchleitbar und berührt die Trenneinrichtung auf ihrer ersten Seite zwecks Wärmeübergang. Durch den Wärmeübergang von einem der Schmiermedien auf die Trenneinrichtung des Wärmetauschers kann Wärme von dem Schmiermedium zur Trenneinrichtung, oder umgekehrt übertragen werden.

In einer Ausführungsform der Erfindung ist das andere Schmiermedium in dem zweiten Bereich durchleitbar und berührt die Trenneinrichtung auf ihrer zweiten Seite zwecks Wärmeübergang, so dass ein Wärmeübergang von der Trenneinrichtung auf das andere Schmiermedium erfolgt und sich ein Wärmedurchgang durch die Trenneinrichtung einstellt. Der sich einstellende Wärmedurchgang erlaubt somit einen Wärmetransport zwischen den beiden Schmiermedien, welche jedoch durch den Wärmetauscher fluiddicht voneinander abgegrenzt sind.

In einer Ausführungsform der Erfindung ist das die zweite Seite der Trenneinrichtung des Wärmetauschers berührende andere Schmiermedium fluidführend mit dem zugeordneten Schmierkreislauf verbunden, insbesondere ist das im zugeordneten Schmierkreislauf strömende andere Schmiermedium vollständig über den Wärmetauscher geführt. Sofern der andere Schmierkreislauf dem Getriebe zugeordnet ist, wird hierdurch die am Getriebe im Betrieb entstehende Wärme zumindest teilweise an das andere Schmiermedium übertragen und die Wärme kann über den Wärmetauscher beispielsweise zur Erhitzung des Schmiermediums des Rotorlagers eingesetzt werden.

In einer Ausführungsform der Erfindung ist die Trenneinrichtung des Wärmetauschers von der zweiten Seite her durch ein Wärmeleitmedium, insbesondere eine Wasser-Glycol-Mischung, berührt, so dass ein Wärmeübergang von der Trenneinrichtung auf das Wärmeleitmedium erfolgt und sich ein Wärmedurchgang durch die Trenneinrichtung einstellt. Durch geeignete Wahl des Wärmeleitmediums lässt sich so ein möglichst effektiver Wärmetransport erreichen, insbesondere kann die Viskosität eines separaten Wärmeleitmediums unabhängig von den Anforderungen an die Viskosität der Schmiermedien ausgewählt werden.

In einer Ausführungsform der Erfindung weist die Wärmetransporteinrichtung einen weiteren Wärmetauscher auf, der auf einer ersten Seite seiner Trenneinrichtung von dem Wärmeleitmedium und auf einer zweiten Seite seiner Trenneinrichtung von dem anderen Schmiermedium als weiteren Wärmetransportfluid berührt ist, so dass das Wärmeleitmedium einen Wärmetransport zwischen den beiden Schmiermedien ermöglicht, jedoch von diesen fluiddicht getrennt ist.

In einer Ausführungsform der Erfindung weist die Wärmetransporteinrichtung eine Pumpe zur erzwungenen Durchleitung eines der Schmiermedien oder des Wärmeleitmediums durch den Wärmetauscher auf.

Alternativ hierzu kann die Wärmetransporteinrichtung auch eine so genannte Heatpipe aufweisen, die jeweils an einem ihrer Enden thermisch mit dem einen und mit dem anderen der Schmierkreisläufe gekoppelt ist. Der Wärmetransport durch die Heatpipe erfolgt hierbei in bekannter Weise über das Verdunsten einer Flüssigkeit niedriger Siedetemperatur an dem wärmeren Ende der Heatpipe, wobei die verdunstete Flüssigkeit an dem anderen, dem kälteren Ende, wiederum kondensiert. Der Rücktransport der Flüssigkeit zum wärmeren Ende erfolgt durch Kapillarwirkung einer porösen Beschichtung auf der Innenseite der Heatpipe.

In einer Ausführungsform der Erfindung ist der Wärmetauscher als Plattenbündeltauscher oder Rohrbündeltauscher ausgebildet.

In einer Ausführungsform der Erfindung ist der Wärmetransport zwischen dem, dem Getriebe zugeordneten Schmierkreislauf und dem, dem Rotorlager zugeordneten Schmierkreislauf durch eine örtlich enge Nachbarschaft der beiden Schmierkreisläufe und/oder durch eine hohe Wärmeleitfähigkeit eines die Vorrichtung aufnehmenden Gehäuses der Windkraftanlage verbessert. Durch die dahingehende bauliche Ausgestaltung ist eine kostengünstige Unterstützung des Wärmetransports zwischen den beiden Schmierkreisläufen realisiert.

Weitere vorteilhafte Ausführungsformen der erfindungsgemäßen Lösung sind Gegenstand der sonstigen Unteransprüche.

Nachstehend ist die Erfindung anhand der in der Zeichnung dargestellten Ausführungsbeispiele im Einzelnen erläutert. Es zeigen:
- Fig.1: eine vereinfachte perspektivische Innenansicht des Gehäuses einer Windkraftanlage;
- Fig.2: eine erste Ausführungsform der erfindungsgemäßen Vorrichtung;
- Fig.3a,3b: eine zweite und dritte Ausführungsform der erfindungsgemäßen Vorrichtung und
- Fig.4: eine vierte Ausführungsform der erfindungsgemäßen Vorrichtung.

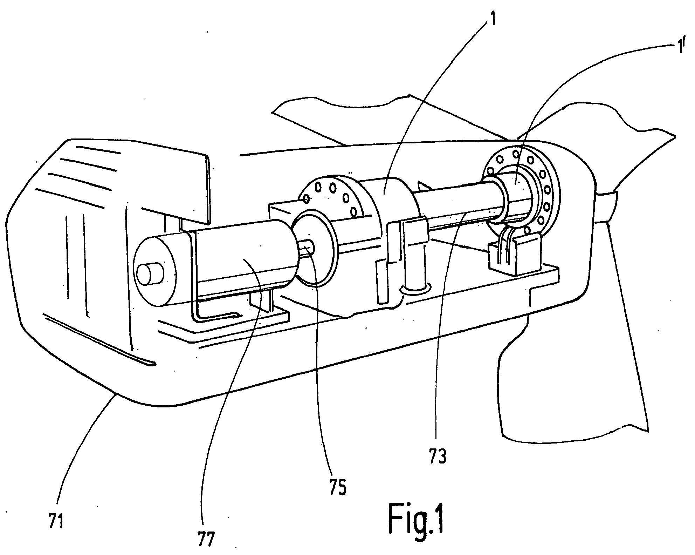

In der Fig.1 ist eine vereinfachte perspektivische Innenansicht des Gehäuses 71 (auch: Maschinenhaus, Gondel oder Nacelle) einer Windkraftanlage dargestellt. Der mit Blick auf Fig. 1 am rechten Bildrand angedeutete Rotor der Windkraftanlage ist über eine erste Welle 73, der Rotorwelle mit dem Getriebe 1 gekoppelt. Die Rotorwelle 73 ist hierbei in einem Rotorlager 1' (auch: Hauptlager) gelagert, das bevorzugt als Wälzlager ausgeführt ist. Das Getriebe 1 ist wiederum über eine zweite Welle 75 mit dem Generator 77 der Windkraftanlage gekoppelt. Dergestalt wird eine Drehbewegung des Rotors (ohne Bezugszeichen) über die erste Welle 73 zum Getriebe 1 übertragen, das die relativ niedrige Drehzahl des Rotors in eine für den Betrieb des Generators 77 notwendige, höhere Drehzahl umsetzt und den Generator 77 über die zweite Welle 75 mit der erhöhten Drehzahl antreibt.

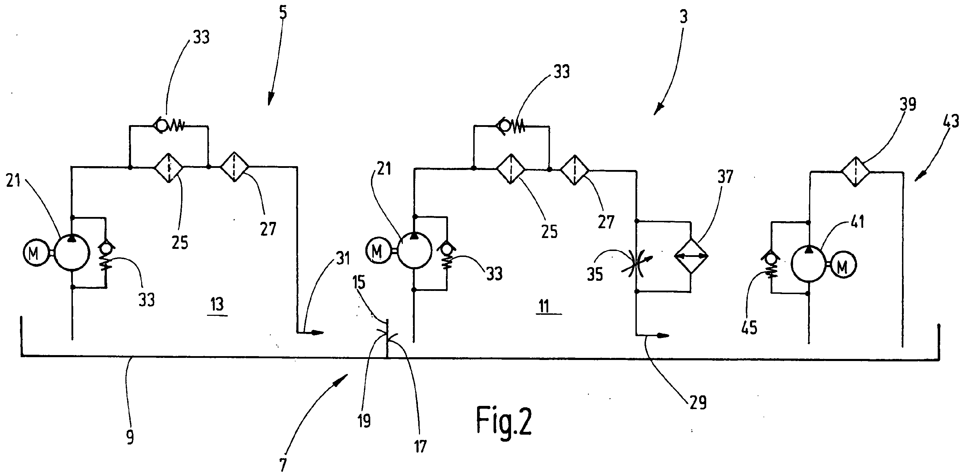

Dem Getriebe 1 und dem Rotorlager 1' ist jeweils ein Schmierkreislauf 3 bzw. 5 (s.Fig.2 bis 4) der erfindungsgemäßen Vorrichtung zugeordnet.

In den Figuren 2, 3 und 4 ist die erfindungsgemäße Vorrichtung zum Schmieren des Getriebes 1 (siehe Fig.1) sowie des Lagers 1' (siehe Fig.1) jeweils am Beispiel einer Vorrichtung zum Schmieren eines Getriebes 1 sowie eines Rotorlagers 1' bei einer Windkraftanlage dargestellt. Hierbei sind dem Getriebe 1 und dem Lager 1' jeweils mindestens ein Schmier kreislauf 3 und 5 der Vorrichtung zugeordnet, in dem im Betrieb der Vorrichtung jeweils ein Schmiermedium strömt.

Gemäß der Fig. 2 weist die Vorrichtung eine Wärmetauscheinrichtung 7 für einen Wärmetransport zwischen dem Schmierkreislauf 3 des Getriebes 1 und dem Schmierkreislauf 5 des Lagers 1' auf, wobei die Wärmetauscheinrichtung 7 einen Tank 9 zur Aufnahme von Schmiermedien aufweist, der mittels einer Trenneinrichtung 15 in einen ersten Bereich 11 und einen zweiten Bereich 13 unterteilt ist. In dem ersten Bereich 11 ist ein Schmiermedium für den Schmierkreislauf 3 des Getriebes 1 aufnehmbar, während im zweiten Bereich 13 ein Schmiermedium für den Schmierkreislauf 5 des Rotorlagers 1' aufnehmbar ist. Die dahingehende Trenneinrichtung 15 der Wärmetauscheinrichtung 7 erstreckt sich vorzugsweise senkrecht zu einem Boden des Tanks 9 und unterteilt diesen in die beiden Bereiche 11 und 13.

Die Trenneinrichtung 15 ist bei der gezeigten Ausführungsform vorzugsweise in der Art einer Trennwand ausgeführt, die einen Übertritt des im ersten Bereich 11 aufgenommenen Schmiermediums in den zweiten Bereich 13 und umgekehrt wirksam verhindert. Das durch den ersten Bereich 11 durchleitbare Schmiermedium berührt die Trennwand 15 auf einer ersten Seite 17, während das durch den zweiten Bereich 13 durchleitbare Schmiermedium die Trennwand 15 auf einer zweiten Seite 19 berührt. Ein Wärmeausgleich oder eine Wärmekompensation bei einer Differenz der Temperatur des Schmiermediums im Bereich 11 zur Temperatur des Schmiermediums im Bereich 13 der Wärmetauscheinrichtung 7 ist durch einen Wärmedurchgang durch die Trennwand 15 realisiert. Beim Betrieb einer Windkraftanlage wird das im Schmierkreislauf 3 des Getriebes 1 zirkulierende eine Schmiermedium im Normalbetrieb eine höhere Temperatur annehmen als das im zweiten Bereich 13 zirkulierende Schmiermedium des Schmierkreislaufs 5 des Rotorlagers 1'. Dies rührt daher, dass durch das Getriebe 1 einer Windkraftanlage eine Übersetzung von sehr niedrigen zu sehr hohen Drehzahlen erfolgt und dass bei der hierdurch auftretenden Reibung beispielsweise an Zahnrädern des Getriebes 1, die in Fluidkommunikation mit dem Schmiermedium stehen, erhebliche Verlustwärme entsteht. Durch die relativ niedrige Drehzahl des Rotors der Windkraftanlage und der mit diesem verbundenen Welle 73 (siehe Fig. 1) ist die Erwärmung des Schmiermediums im Schmierkreislauf 5 des Rotorlagers 1' hingegen in der Regel wesentlich niedriger.

Bei der Ausführungsform gemäß Fig. 2 erfolgt ein Wärmetransport zum Ausgleich einer Differenz zwischen der Temperatur des Schmiermediums in dem Schmierkreislauf 3 des Getriebes 1 und der Temperatur des Schmiermediums in dem Schmierkreislauf 5 des Lagers 1' durch einen Wärmedurchgang durch die Trennwand 15, indem zunächst ein Wärmeübergang von dem einen Schmiermedium im ersten Bereich 11 auf die erste Seite 17 der Trennwand 15, anschließend eine Wärmeleitung durch die Trennwand 15 und schließlich ein erneuter Wärmeübergang von der zweiten Seite 19 der Trennwand 15 auf das andere, im zweiten Bereich 13 strömende Schmiermedium erfolgt. Hierdurch ist zum einen eine Erwärmung des Schmiermediums für den Schmierkreislauf 5 des Rotorlagers1', zum anderen eine Abkühlung des Schmiermediums für den Schmierkreislauf 3 des Getriebes 1 erreicht.

In üblicher Weise sind die Schmierkreisläufe 3 bzw. 5 jeweils über eine Pumpe 21 an den zugeordneten Bereich 11 bzw. 13 des Tanks 9 angeschlossen und über eine oder mehrere Filtereinrichtungen 25, 27 gelangt das jeweilige Schmiermedium mittels einer Anschlusseinrichtung 29, 31 zu dem Getriebe 1 (siehe Fig. 1) bzw. zu dem Rotorlager 1'(siehe Fig.1). Die Pumpe 21 sowie eine oder mehrere der Filtereinrichtungen 25, 27 sind hierbei jeweils über ein zugeordnetes Rückschlagventil 33 überbrückbar. Der Schmierkreislauf 3 des Getriebes 1 weist darüber hinaus eine Kühleinrichtung 37 und ein hierzu parallel geschaltetes Thermo-Bypassventil 35 auf. Unterstützt durch die Kühleinrichtung 37 kann das Schmiermedium des Getriebes 1 auf eine günstige Betriebstemperatur gekühlt werden. Eine Überbrückung des Filters 25 ist durch das parallel geschaltete Rückschlagventil 33 möglich, so dass ein Transport des Schmiermediums auch bei einem teilweise oder ganz durch Verschmutzung zugesetzten Filter 25 gewährleistet ist. Für das Filter 25 ist eine Filterfeinheit von ungefähr 10 µm, für das Filter 27 bevorzugt eine von ca. 50µm vorgesehen.

Am rechten Rand der Fig. 2 dargestellt ist eine vom eigentlichen Schmierkreislauf 3 getrennt angeordnete, zusätzliche Filtereinrichtung 43 als sogenanntes "Offline-Filter" vorgesehen, welches ein Filter 39 aufweist, das durch eine hohe Filterfeinheit von ca. 5µm eine zusätzliche Reinigung des Schmiermediums für den Schmierkreislauf 3 des Getriebes 1 vornimmt. Das dahingehende Offline-Filter 43 wird über eine Pumpe 41, zu der parallel ein Rückschlagventil 45 angeordnet ist mit Schmiermedium aus dem Bereich 11 des Tanks 9 versorgt und führt das Schmiermedium, nach dessen Abreinigung, wieder dem Bereich 11 zu. Insbesondere zum Erreichen hoher Standzeiten bei Offshore-Windkraftanlagen ist eine derartige zusätzliche Filtereinrichtung 43 vorteilhaft.

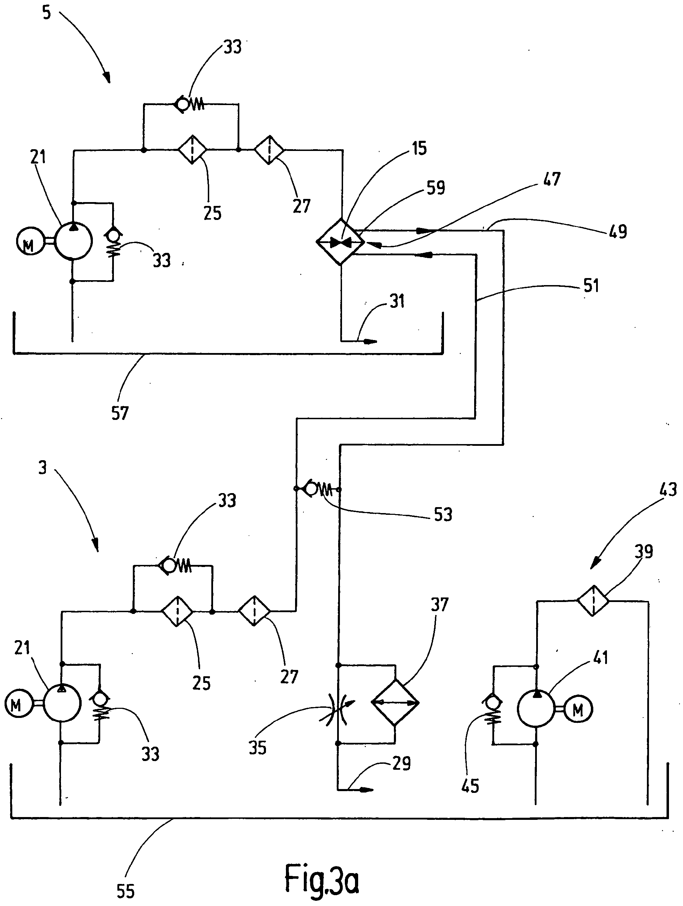

Bei der Ausführungsform nach der Fig.3a ist ein erster Tank 55 für das eine Schmiermedium des Schmierkreislaufs 3 des Getriebes 1 (siehe Fig.1) und hiervon getrennt ein zweiter Tank 57 für das andere Schmiermedium für den Schmierkreislauf 5 des Rotorlagers 1' (siehe Fig.1) vorgesehen. Der erste Tank 55 kann auch durch einen, das Schmiermedium für das Getriebe 1 aufnehmenden Getriebekasten gebildet sein, wodurch eine besonders bauraum- und materialsparende Bauweise der Wärmetauscheinrichtung ermöglicht ist. Der zweite Tank 57 kann hierbei an dem Getriebekasten des Getriebes 1 angeordnet sein, wobei der Getriebekasten insofern die Trenneinrichtung 15 bilden kann. Abgesehen von der abweichenden Ausführung der Wärmetauscheinrichtung 47 von der in der Fig. 2 dargestellten Wärmetauscheinrichtung 7 unterscheiden sich die Komponenten der Schmierkreisläufe 3, 5 sowie des Offline-Filters 43 nicht von den in Fig. 2 dargestellten, so dass hier auf eine wiederholte Erläuterung dieser Details verzichtet wird.

Die Wärmetauscheinrichtung 47, die beispielsweise einen Wärmetauscher in Form eines Plattenbündelspeichers oder einer eines Rohrbündelspeichers aufweisen kann, wird auf einer ersten Seite über Leitungen 49 und 51, die an den Schmierkreislauf 3 des Getriebes 1 angeschlossen sind, mit dem einen Schmiermedium des Schmierkreislaufs 3 des Getriebes 1 versorgt. Das Schmiermedium strömt eine erste Seite (nicht dargestellt) der Trenneinrichtung 15 des Wärmetauschers 59 der Wärmetauscheinrichtung 47 an. Die Anschlussleitungen 49 und 51 sind hierbei durch ein Rückschlagventil 53 überbrückbar, so dass, sofern es beim Zufluss des einen Schmiermediums über die Leitung 51 zum Wärmetauscher 59 zu einem Überdruck kommt, das Schmiermedium über das Rückschlagventil 53 direkt unter Umgehung des Wärmetauschers 59 in die Leitung 49 gelangt und so direkt der Kühleinrichtung 37 bzw. dem Thermo-Bypassventil 35 zugeführt wird. Dergestalt ist auch in diesem Fall eine kontinuierliche Schmierung des Getriebes 1 gewährleistet. Auf der zweiten Seite (nicht dargestellt) der Trenneinrichtung 15 des Wärmetauschers 59 wird diese von dem anderen Schmiermedium des Schmierkreislaufs 5 des Rotorlagers 1' angeströmt. Dergestalt kommt es zu einem Temperaturausgleich zwischen den beiden Schmiermedien.

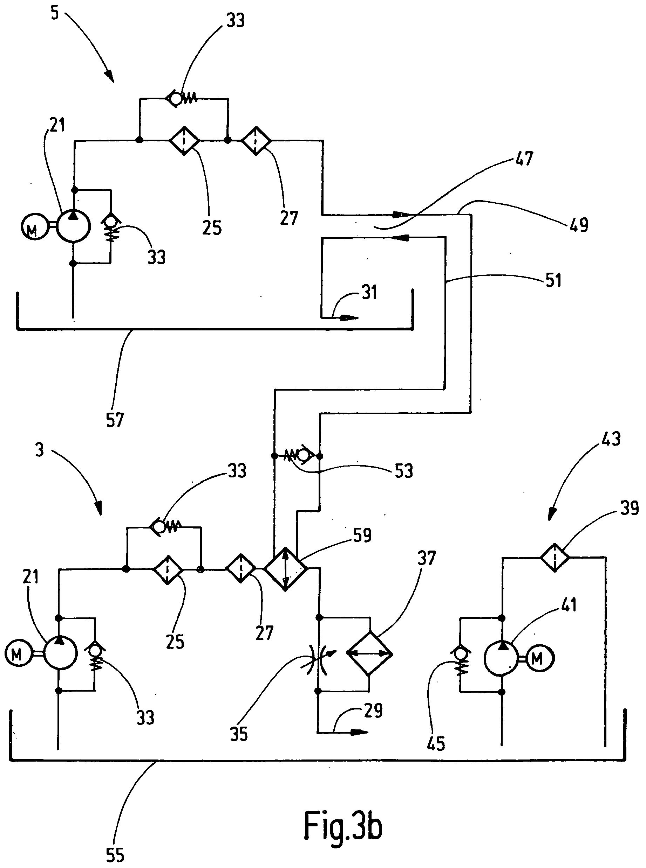

Bei der Ausführungsform gemäß Fig.3b ist der Wärmetauscher 59 dem Schmierkreislauf 3 des Getriebes 1 zugeordnet und der Wärmetauscher 59 wird von dem Schmiermedium des Schmierkreislaufes 3 des Getriebes 1 angeströmt. Sinngemäß ist die Anordnung des Rückschlagventils 53 zwischen den Anschlussleitungen 49 und 51 so, dass das Rückschlagventil 53 von der Anschlussleitung 49 zu der Anschlussleitung 51 überströmbar ist.

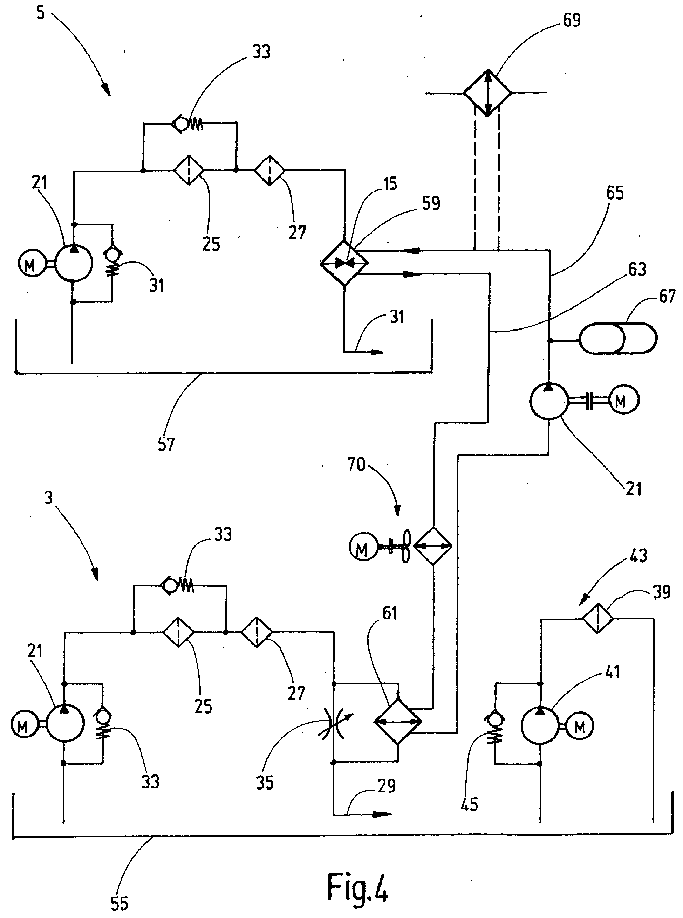

Bei der Ausführungsform gemäß Fig. 4 ist neben dem Wärmetauscher 59 ein weiterer Wärmetauscher 61 vorgesehen, der über eine Pumpe 21 sowie Leitungen 63 und 65 mit dem Wärmetauscher 59 verbunden ist. Der Wärmetauscher 59 wird auf seiner ersten Seite von dem Schmiermedium des Schmierkreislaufs 5 des Rotorlagers 1' (siehe Fig.1) durchströmt während der Wärmetauscher 61 auf seiner ersten Seite von dem Schmiermedium des Schmierkreislaufs 3 des Getriebes 1 (siehe Fig.1) durchströmt ist. Eine thermische Kopplung der beiden Wärmetauscher 59 und 61 auf ihrer jeweiligen zweiten Seite, erfolgt durch ein von den Schmiermedien getrenntes Wärmeleitmedium, beispielsweise in Form von einer Wasser-Glycol-Mischung. Hierdurch ist ein Wärmetransport vom Schmierkreislauf 3 des Getriebes 1 zum Schmierkreislauf 5 des Rotors 1' realisiert. Das Wärmeleitmedium wird hierbei mittels der Pumpe 21 zur ersten Seite des Wärmetauschers 59 gefördert, wobei am Ausgang der Pumpe 21, an der Leitung 65, ein Ausgleichsgefäß 67 zur Vermeidung von Druckstößen des Wärmeleitmediums angeordnet ist.

Nur skizzenhaft ist in Fig. 4 ein optionaler, weiterer, und ebenfalls von dem Wärmeleitmedium durchströmter Wärmetauscher 69 dargestellt, über den weitere Komponenten der Windkraftanlage, wie etwa ein Generator, ein Umrichter und weitere Bauteile der Leistungselektrik und -elektronik (nicht dargestellt) gekühlt werden können. Der Anschluss des weiteren Wärmetauschers 69 kann beispielsweise über die strichliniert dargestellten Leitungen an einer (nicht dargestellten) Trennstelle in der Leitung 65 vorgenommen sein, so dass das in der Leitung 65 strömende Wärmeleitmedium auch über den weiteren Wärmetauscher 69 geführt ist.

Des Weiteren kann insbesondere eine zusätzliche Kühleinrichtung 70, auch mit parallel geschaltetem Thermo-Bypassventil, in die Leitung 63 eingefügt sein, so dass eine unterstützende Kühlung des Wärmeleitmediums ermöglicht ist.

Eine verbesserte thermische Kopplung der beiden Schmierkreisläufe 3 und 5 kann in allen dargestellten Ausführungsformen auch dadurch erreicht werden, dass die für die Aufnahme der Schmiermittel vorgesehenen Tanks 55, 57 (Fig.3a, 3b und 4) bzw. die beiden Bereiche 11 und 13 des Tanks 9 (Fig. 2) in einer Art "Tank in Tank"- Lösung ausgeführt werden. So kann beispielsweise der Tank 55 innerhalb des Tanks 57 angeordnet sein (Fig.3a, 3b und 4), so dass über die Wandungen des Tanks 55 ein großflächiger Wärmedurchgang von dem Schmiermedium des Getriebes 1 auf das Schmiermedium des Rotorlagers 1' ermöglicht ist.

Bei der Ausführungsform gemäß Fig. 2 kann die als Trennwand ausgeführte Trenneinrichtung 15 zum einen zu deren mechanischen Stabilisierung, zum anderen aber auch für einen erhöhten Wärmedurchgang mit einer nichtebenen, insbesondere verrippten oder andersartig modulierten Struktur ausgestaltet sein. Durch die vergrößerte Oberfläche einer dahingehenden Trennwand ist ein verbesserter Wärmedurchgang durch die Trennwand realisiert.

Alle Ausführungsformen können darüber hinaus mit weiteren Komponenten wie beispielsweise Abscheidern für die Entfernung von Luft und/oder Wasser aus Öl sowie Abscheidern für die Entfernung von Ölschlamm bzw. Ölalterungsstoffen aus Öl ausgestattet sein.

## Patentansprüche

1. Vorrichtung zum Schmieren eines Getriebes (1) sowie eines Lagers (1'), insbesondere eines Rotorlagers bei einer Windkraftanlage, wobei dem Getriebe (1) und dem Lager (1') jeweils mindestens ein Schmierkreislauf (3, 5) der Vorrichtung zugeordnet ist, in dem im Betrieb der Vorrichtung jeweils ein Schmiermedium strömt, **dadurch gekennzeichnet, dass** die Vorrichtung eine Wärmetauscheinrichtung (7, 59, 61) für einen Wärmetransport zwischen dem Schmierkreislauf (3) des Getriebes (1) und dem Schmierkreislauf (5) des Lagers (1') aufweist, und dass die Wärmetauscheinrichtung (7, 59, 61) im Betrieb der Vorrichtung eine Differenz zwischen der Temperatur des Schmiermediums in dem Schmierkreislauf (3) des Getriebes (1) und der Temperatur des Schmiermediums in dem Schmierkreislauf (5) des Lagers (1') durch Wärmeausgleich zumindest teilweise ausgleicht.

2. Vorrichtung nach Anspruch 1, **dadurch gekennzeichnet, dass** die Wärmetauscheinrichtung einen Wärmetauscher (59, 61) mit einer Trenneinrichtung (15), vorzugsweise eine Trennwand zur Trennung eines ersten, auf einer ersten Seite (17) der Trenneinrichtung (15) angeordneten Bereichs (11) des Wärmetauschers (59, 61) von einem zweiten, auf einer zweiten Seite (19) der Trenneinrichtung (15) angeordneten Bereichs (13) des Wärmetauschers (59, 61) aufweist, dass die Trenneinrichtung (15) den ersten Bereich (11) und den zweiten Bereich (13) thermisch miteinander koppelt, und dass in dem ersten Bereich (11) eines der Schmiermedien durchleitbar ist und die Trenneinrichtung (15) auf ihrer ersten Seite (17) zwecks Wärmeübergang berührt.

3. Vorrichtung nach einem der vorhergehenden Ansprüche, **dadurch gekennzeichnet, dass** das andere Schmiermedium in dem zweiten Bereich (13) durchleitbar ist und die Trenneinrichtung (15) auf ihrer zweiten Seite (19) zwecks Wärmeübergang berührt, so dass ein Wärmeübergang von der Trenneinrichtung (15) auf das andere Schmiermedium erfolgt und sich ein Wärmedurchgang durch die Trenneinrichtung (15) einstellt.

4. Vorrichtung nach einem der vorhergehenden Ansprüche, **dadurch gekennzeichnet, dass** das die zweite Seite (19) der Trenneinrichtung (15) des Wärmetauschers (59, 61) berührende andere Schmiermedium fluidführend mit dem zugeordneten Schmierkreislauf (5) verbunden ist, insbesondere dass das im zugeordneten Schmierkreislauf (5) strömende andere Schmiermedium vollständig über den Wärmetauscher (59, 61) geführt ist.

5. Vorrichtung nach einem der vorhergehenden Ansprüche, **dadurch gekennzeichnet, dass** die Trenneinrichtung (15) des Wärmetauschers (59, 61) von der zweiten Seite her durch ein Wärmeleitmedium, insbesondere eine Wasser-Glycol-Mischung, berührt ist, so dass ein Wärmeübergang von der Trenneinrichtung (15) auf das Wärmeleitmedium erfolgt und sich ein Wärmedurchgang durch die Trenneinrichtung (15) einstellt.

6. Vorrichtung nach Anspruch 5, **dadurch gekennzeichnet, dass** die Wärmetransporteinrichtung einen weiteren Wärmetauscher (59, 61) aufweist, der auf einer ersten Seite seiner Trenneinrichtung (15) von dem Wärmeleitmedium und auf einer zweiten Seite (19) seiner Trenneinrichtung (15) von dem anderen Schmiermedium als weiterem Wärmetransportfluid berührt ist, so dass das Wärmeleitmedium einen Wärmetransport zwischen den beiden Schmiermedien ermöglicht, jedoch von diesen fluiddicht getrennt ist.

7. Vorrichtung nach einem der vorhergehenden Ansprüche, **dadurch gekennzeichnet, dass** die Wärmetransporteinrichtung eine Pumpe (21) zur erzwungenen Durchleitung eines der Schmiermedien oder des Wärmeleitmediums durch den Wärmetauscher (59, 61) aufweist.

8. Vorrichtung nach einem der vorhergehenden Ansprüche, **dadurch gekennzeichnet, dass** der Wärmetauscher (59, 61) als Plattenbündeltauscher oder Rohrbündeltauscher ausgebildet ist.

9. Vorrichtung nach einem der vorhergehenden Ansprüche, **dadurch gekennzeichnet, dass** der Wärmetransport zwischen dem dem Getriebe (1) zugeordneten Schmierkreislauf (3) und dem dem Rotorlager (1') zugeordneten Schmierkreislauf (5) durch eine örtlich enge Nachbar schaft der beiden Schmierkreisläufe (3, 5) und/oder durch eine hohe Wärmeleitfähigkeit eines die Vorrichtung aufnehmenden Gehäuses (71) der Windkraftanlage verbessert ist.

## Claims

1. A device for lubricating a transmission (1) as well as a bearing (1'), in particular a rotor bearing in a wind turbine, the transmission (1) and the bearing (1') each being associated with at least one lubrication circuit (3, 5) of the device, in each circuit of which a lubricating medium respectively flows during operation of the device, **characterised in that** the device has a heat exchanging device (7, 59, 61) for heat transfer between the lubrication circuit (3) of the transmission (1) and the lubrication circuit (5) of the bearing (1'), and that the heat exchanging device (7, 59, 61) at least partially equalises a difference between the temperature of the lubricating medium in the lubrication circuit (3) of the transmission (1) and the temperature of the lubricating medium in the lubrication circuit (5) of the bearing (1') through heat compensation when the device is in operation.

2. The device according to Claim 1, **characterised in that** the heat exchanging device has a heat exchanger (59, 61) with a separator (15), preferably a partition for separating a first region (11) of the heat exchanger (59, 61) disposed on a first side (17) of the separator (15) from a second region (13) of the heat exchanger (59, 61) disposed on a second side (19) of the separator (15), that the separator (15) provides thermal coupling between the first region (11) and the second region (13), and that one of the lubricating media can be passed through in the first region (11) and comes into contact with the separator (15) on its first side (17) for the purpose of heat transfer.

3. The device according to any of the preceding claims, **characterised in that** the other lubricating medium can be passed through in the second region (13) and comes into contact with the separator (15) on its second side (19) for the purpose of heat transfer so that there is a heat transfer from the separator (15) to the other lubricating medium and heat transmission through the separator (15) is established.

4. The device according to any of the preceding claims, **characterised in that** the other lubricating medium that comes into contact with the second side (19) of the separator (15) of the heat exchanger (59, 61) is connected with the associated lubrication circuit (5) such as to convey fluid, and in particular that the other lubricating medium flowing in the associated lubrication circuit (5) is conveyed completely through the heat exchanger (59, 61).

5. The device according to any of the preceding claims, **characterised in that** the separator (15) of the heat exchanger (59, 61) comes into contact with a heat transfer medium from the second side, in particular a water-glycol mixture, so that there is heat transfer from the separator (15) to the heat transfer medium and heat transmission through the separator (15) is established.

6. The device according to Claim 5, **characterised in that** the heat transfer device has a further heat exchanger (59, 61) which comes into contact with the heat transfer medium on a first side of its separator (15), and which comes into contact with the other lubricating medium as a further heat transfer fluid on a second side (19) of its separator (15) so that the heat transfer medium makes heat transfer between the two lubricating media possible, but is separated from these media in a fluid-tight manner.

7. The device according to any of the preceding claims, **characterised in that** the heat transfer device has a pump (21) for the forced passage of one of the lubricating media or of the heat transfer medium through the heat exchanger (59, 61).

8. The device according to any of the preceding claims, **characterised in that** the heat exchanger (59, 61) is designed as a plate bundle exchanger or a tube bundle exchanger.

9. The device according to any of the preceding claims, **characterised in that** the heat transfer between the lubrication circuit (3) associated with the transmission (1) and the lubrication circuit (5) associated with the rotor bearing (1') is improved by a locally close proximity of the two lubrication circuits (3, 5) and/or by high thermal conductivity of a housing (71) of the wind turbine that accommodates the device.

## Revendications

1. Installation de lubrification d'une transmission (1), ainsi que d'un palier (1'), notamment d'un palier de rotor dans une éolienne, dans laquelle il est associé à la transmission (1) et au palier (1') respectivement au moins un circuit (3, 5) de lubrification de l'installation, dans lequel un fluide de lubrification passe lorsque l'installation fonctionne, **caractérisée en ce que** l'installation a un dispositif (7, 59, 61) d'échange de chaleur pour un transport de chaleur entre le circuit (3) de lubrification de la transmission (1) et le circuit (5) de lubrification du palier (1') et **en ce que** le dispositif (7, 59, 61) d'échange de chaleur compense, au moins en partie, par échange de chaleur, une différence entre la température du fluide de lubrification dans le circuit (3) de lubrification de la transmission (1) et la température du fluide de lubrification dans le circuit (5) de lubrification du palier (1').

2. Installation suivant la revendication 1, **caractérisée en ce que** le dispositif d'échange de chaleur comprend un échangeur de chaleur (59, 61) ayant un dispositif (15) de séparation, de préférence une cloison de séparation d'une première partie (11) de l'échangeur de chaleur (59, 61), disposée d'un premier côté (17) du dispositif (15) de séparation, d'une deuxième partie (13) de l'échangeur de chaleur (59, 61), disposée d'un deuxième côté (19) du dispositif (15) de séparation, **en ce que** le dispositif (15) de séparation couple thermiquement entre elles la première partie (11) et la deuxième partie (13) et **en ce que** l'un des fluides de lubrification peut passer dans la première partie (11) et lèche le dispositif (15) de séparation sur son premier côté (15) en vue d'une transmission de chaleur.

3. Installation suivant l'une des revendications précédentes, **caractérisée en ce que** l'autre fluide de lubrification peut passer dans la deuxième partie (13) et lèche le dispositif (15) de séparation sur son deuxième côté (19) en vue d'une transmission de chaleur, de manière à effectuer une transmission de chaleur du dispositif (15) de séparation à l'autre fluide de lubrification et à établir un passage de la chaleur à travers le dispositif (15) de séparation.

4. Installation suivant l'une des revendications précédentes, **caractérisée en ce que** l'autre fluide de lubrification léchant le deuxième côté (19) du dispositif (15) de séparation de l'échangeur de chaleur (59, 61) est relié, de manière fluidique, au circuit (5) de lubrification associé, notamment **en ce que** l'autre fluide de lubrification passant dans le circuit (5) de lubrification associé passe complètement par l'échangeur de chaleur (59, 61).

5. Installation suivant l'une des revendications précédentes, **caractérisée en ce que** le dispositif (15) de séparation de l'échangeur de chaleur (59, 61) est léché, à partir du deuxième côté, par un fluide conducteur de la chaleur, notamment par un mélange d'eau et de glycol, de manière à effectuer une transmission de chaleur du dispositif (15) de séparation au fluide conducteur de la chaleur et à établir un passage de la chaleur à travers le dispositif (15) de séparation.

6. Installation suivant la revendication 5, **caractérisée en ce que** le dispositif de transport de chaleur a un autre échangeur de chaleur (59, 61), qui est léché, d'un premier côté de son dispositif (15) de séparation, par le fluide conducteur de la chaleur, et, d'un deuxième côté (19) de son dispositif (15) de séparation, par l'autre fluide de lubrification comme autre fluide de transport de la chaleur, de sorte que le fluide conducteur de la chaleur rend possible un transport de chaleur entre les deux fluides de lubrification, tout en étant séparé de ceux-ci d'une manière étanche au fluide.

7. Installation suivant l'une des revendications précédentes, **caractérisée en ce que** le dispositif de transport de chaleur a une pompe (21) pour faire passer de manière forcée l'un des fluides de lubrification ou du fluide conducteur de la chaleur dans l'échangeur de chaleur (59, 61).

8. Installation suivant l'une des revendications précédentes, **caractérisée en ce que** l'échangeur de chaleur (59, 61) est constitué sous la forme d'un échangeur à faisceau de plaque ou d'un échangeur à faisceau tubulaire.

9. Installation suivant l'une des revendications précédentes, **caractérisée en ce que** le transport de chaleur, entre le circuit (3) de lubrification associé à la transmission (1) et le circuit (5) de lubrification associé au palier (1') du rotor, est amélioré par une proximité étroite dans l'espace entre les deux circuits (3, 5) de lubrification et/ou par une grande conductibilité de la chaleur d'une enveloppe (71), recevant l'installation, de l'éolienne.
